# EUROPÄISCHE PATENTSCHRIFT

(11) **EP 1 089 307 B1**
(45) Veröffentlichungstag und Bekanntmachung des Hinweises auf die Patenterteilung: **26.01.2005**
(21) Anmeldenummer: 00117906.8
(22) Anmeldetag: 19.08.2000
(51) Int. Cl.: H01H 25/06, H01H 9/18

(54) **Einstelleinrichtung**
Adjustment device
Dispositif de réglage

(30) Priorität: 01.10.1999 DE 19947406
(43) Veröffentlichungstag der Anmeldung: 04.04.2001
(73) Patentinhaber: Bayerische Motoren Werke Aktiengesellschaft, 80809 München (DE)
(72) Erfinder: Künzner, Herrmann, 85356 Freising (DE)

(56) Entgegenhaltungen:
- EP-A- 0 605 324
- DE-A- 19 621 025
- DE-C- 19 704 412
- US-A- 5 931 378

## Beschreibung

Die Erfindung betrifft eine Einstelleinrichtung gemäß dem Oberbegriff des Anspruchs 1.

Bei Drehstellern ist es allgemein bekannt, einen beleuchtbaren Index, der insbesonders einen Zeiger umfaßt, vorzusehen, so daß ein Bediener auch bei Nacht die Dreheinstellung des Drehstellers erkennen kann. Ferner ist es bekannt, Drehsteller derart mit einem Schalter zu kombinieren, daß über den Drehsteller eine manuelle Einstellung eines Wertes möglich ist und über den Schalter ein anderer Modus ausgewählt werden kann. Im anderen Modus, z.B. einem Automatikmodus, wird der am Drehsteller manuell eingestellte Wert überschrieben. Um dem Bediener anzuzeigen, ob sich eine Einrichtung in einem manuellen oder dem anderen Modus befindet, wird letzterer oftmals durch den Betrieb eines separaten Leuchtmittels dargestellt.

Solche separaten Darstellungen sind jedoch teuer. Ferner werden oft Inkrementgeber als Drehsteller verwendet, die keinen Endanschlag und somit keine taktile Rückmeldung besitzen. Ein solcher Inkrementgeber ist notwendig, um das Überschreiben einer manuellen Einstellung, beispielsweise durch einen Automatik-Modus oder eine Fernsteuerung, vornehmen zu können.

Die US-A-5 931 378 beschreibt eine Vorrichtung zur Bedienung einer Klimaanlage für ein Fahrzeug. Für die linksseitige und rechtsseitige Vor-Einstellung der Temperatur ist jeweils ein Drehsteller, eine Skala mit Temperaturangaben und ein Indikator vorgesehen. In einem Automatik-Modus wandert der Indikator auf die von der Automatik-Regelung herbeigeführte, gemessene Temperatur und im manuellen Modus wandert der Indikator auf die manuell eingestellte Temperatur. Durch Drehen eines Drehknopfs wird der Automatik-Modus verlassen und der zuletzt manuell eingestellte Wert wird eingestellt. Durch Betätigung eines Druckknopfs wird der Automatik-Modus erneut aktiviert.

Aufgabe der vorliegenden Erfindung ist es, eine Einstelleinrichtung anzugeben, bei der in leicht erfassbarer Weise erkennbar ist, welcher Modus gegenwärtig aktiviert ist.

Diese Aufgabe wird durch die im Anspruch 1 genannten Merkmale gelöst.

Ein Kerngedanke der Erfindung ist darin zu sehen, daß zusätzlich zu einer beleuchtbaren Indexanzeige (z.B. Skala oder Zeiger) ein zusätzliches Leuchtmittel zum Drehsteller vorgesehen ist. Ein Schalter ist so ausgebildet, daß - neben seiner eigentlichen Schaltfunktion - durch dessen Betätigung eine Umschaltung zwischen der Beleuchtung der Indexanzeige und dem Betrieb des Leuchtmittels möglich ist. Dabei wird jeweils nur eine Beleuchtung des Drehstellers aktiviert.

Die Anzeige, welcher Modi aktiv ist, nämlich derjenige der manuell einstellbaren Indexanzeige oder der dem Leuchtmittel zugeordnete Modus, wird somit am Drehsteller selbst angezeigt. Damit ist kein separat angeordnetes Display oder Leuchtmittel m ehr n ötig. D arüber h inaus ist eine eindeutige Zuordnung "Anzeige-Bedienelement" möglich. Ferner wird das Problem vermieden, daß die Drehposition des Drehstellers möglicherweise mit dem von der Indexanzeige angezeigten Wert nicht übereinstimmt.

Insbesondere eignet sich ein sogenannter Drehdruckknopf zur Verwirklichung der Erfindung, da in diesem die Dreh- und Schaltfunktion in günstiger und zweckmäßiger Weise kombiniert sind.

Eine b esondere A usführungsform d er Erfindung ist dadurch gekennzeichnet, daß der Drehsteller das Bedienelement eines Potentiometers ist. Ein Potentiometer besitzt in der Regel zwei Anschläge, so daß eine einfache taktile Rückmeldung einer Minimal- und Maximalstellung ohne weiteres möglich ist.

Eine einfache Ausführungsform der Erfindung ist dadurch gekennzeichnet, daß die Indexanzeige (z.B. Zeiger oder Skala) durch eine LED oder einen Lichtleiter beleuchtet oder gebildet wird.

Das Leuchtmittel kann ein Display sein, welches ebenfalls über eine LED, einen Lichtleiter oder ein anderes Leuchtmittel beleuchtet wird.

Die vorliegende Erfindung wird nachfolgend anhand verschiedener Ausführungsformen und mit Bezugnahme auf die beiliegenden Zeichnungen näher erläutert. Die Zeichnungen zeigen in
- Fig. 1a: eine schematische Darstellung eines Druckdrehknopfes mit aktivem Indexzeiger,
- Fig. 1b: eine Darstellung wie Fig. 1a, wobei jedoch der Indexzeiger inaktiviert und der Automatik-Modus aktiviert ist,
- Fig. 2a: eine schematische Darstellung einer weiteren Ausführungsform eines erfindungsgemäßen Drehdruckknopfes mit aktiviertem Indexzeiger,
- Fig. 2b: eine Darstellung wie Fig. 2a, jedoch mit inaktiviertem Indexzeiger und aktiviertem Display,
- Fig. 3a bis 3d: jeweils schematische Darstellungen von zwei Drehdrückknöpfen, bei denen je nach Betätigung eine manuelle Indexanzeige oder ein Display aktiv ist.

Bei der Beschreibung der Ausführungsbeispiele der vorliegenden Erfindung wird jeweils ein Drehdruckknopf verwendet, der ein Potentiometer mit zwei Endanschlägen (nicht dargestellt) umfaßt. Von der Darstellung der diesem Drehdruckknopf zugeordneten Einrichtung und Schaltung wurde abgesehen.

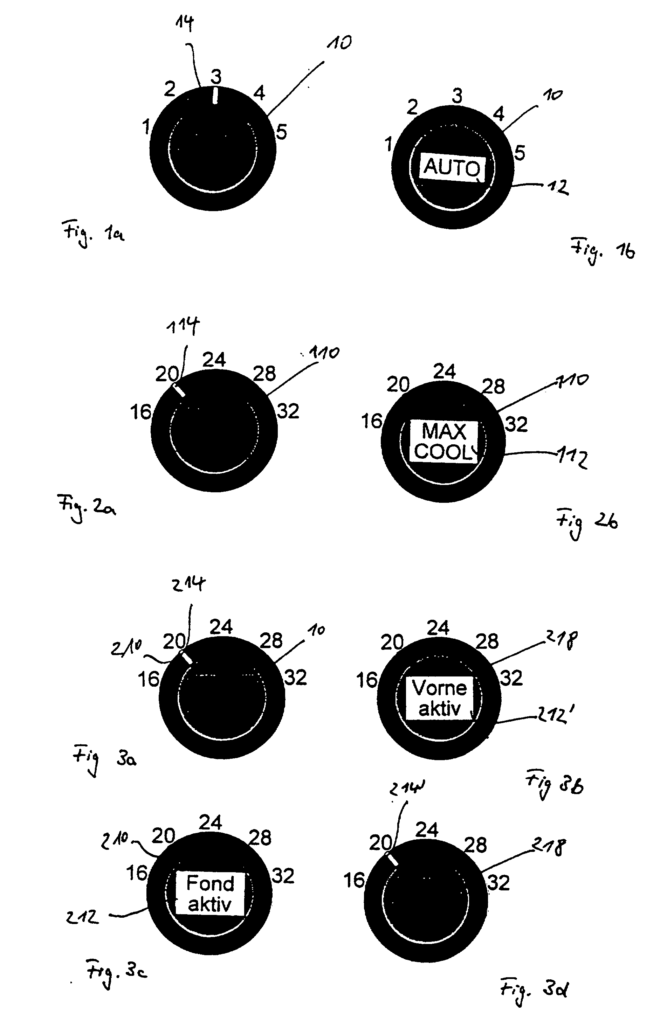

Die Fig. 1a und 1b zeigen einen Drehdruckknopf 10 mit einem Indexzeiger 14, der beleuchtbar ist. Bei Verdrehen des Drehdruckknopfes 10 kann der Indexzeiger über den Skalenbereich 1 bis 5 verdreht werden. In Fig. 1a ist er auf den Wert 3 eingestellt und beleuchtet. In diesem Modus ist eine manuelle Einstellung möglich. Durch Verdrehen des als Bedienelements wirkenden Drehdruckknopfes 10 wird über das Potentiometer ein Signal erzeugt und an ein zu bedienendes Element weitergegeben. Das Signal entspricht dem Wert auf der Skala, der durch den Indexzeiger 14 angezeigt ist. Das Beispiel aus Fig. 1a und 1b bezieht sich vorliegend auf eine Luftmengenregelung einer Klimaanlage in einem Kraftfahrzeug. Bei dem manuellen Modus kann der Bediener die Luftmenge entsprechend der Verdrehung erhöhen oder verringern, wozu er den Drehdruckknopf 10 nach rechts bzw. nach links dreht.

Zusätzlich ist in dem Drehdruckknopf 10 ein Display 12 angeordnet, welches in Fig. 1b mittels eines Lämpchens beleuchtet ist. Dieses Display 12 wird dann beleuchtet, wenn von dem manuellen Modus in einen Automatikmodus durch Drücken des Drehdruckknopfes 10 umgeschaltet wird. Beim Umschalten erlischt die Beleuchtung des Indexzeigers 14 und der Schriftzug "AUTO" leuchtet auf. Eine Rückschaltung in den manuellen Modus kann vorliegend dadurch erreicht werden, daß die Automatik explizit ausgeschaltet wird. Dazu muß bei aktiver Automatik der Drehdruckknopf 14 gedrückt werden.

Die Ausführungsform gemäß Fig. 2a und 2b entspricht der Ausführungsform gemäß Fig. 1a und 1b und unterscheidet sich davon nur dadurch, daß der Drehdruckknopf 14 neben der Temperaturwahl zur Ansteuerung der maximalen Kühlfunktion dient. Daher erscheint im Display 112 anstatt der Bezeichnung "AUTO" nunmehr die Bezeichnung "MAX COOL". Darüber hinaus ist die Skalierung verändert. Diese Ausführungsform ist zur Auswahl einer Maximalkühlfunktion verwendbar, die insbesondere im Automobilbereich in sog. "Heißländern" verwendet wird (Einstellung "MAX COOL" oder "MAX A/C").

Zwischen dem manuellen Modus, nämlich einem Einstellen eines Wertes auf der Skalierung von 16 bis 32 und dem MAX COOL"-Modus kann durch Drücken des Drehdruckknopfes 110 geschaltet werden. Bei manueller Einstellung (Indexzeiger 114 aktiv) wird die Temperatur manuell justiert.

In einer alternativen Ausführungsform kann von der sog. "Automatikfunktion" auf die manuelle Funktion auch allein durch Drehen des Drehdruckknopf zurückgekehrt werden. Zur Auswertung und Umschaltung kann eine vorliegend nicht dargestellte Steuerung vorgesehen sein.

Die Ausführungsform gemäß der Beispiele 3a bis 3d zeigt Drehdruckknöpfe 210, 218 zur Temperatureinstellung in einem Fahrzeug, wobei der Drehdruckknopf 210 im vorderen Fahrzeugbereich und der Drehdruckknopf 218 im Fondbereich eines Fahrzeugs angeordnet sind. Insbesondere bei fondorientierten Luxusfahrzeugen ist es üblich, daß der hinten Sitzende die vordere Klimaeinstellung überschreiben können soll, um die Klimaanlage für sich voll zu nutzen. Beim vorliegenden Ausführungsbeispiel ist gemäß der Einstellung in den Fig. 3a der vordere Drehdruckknopf 210 aktiv. Dies wird dem im Fondbereich sitzenden Fahrzeuginsassen durch die Displayanzeige "Vorne aktiv" des dort angeordneten Drehdruckknopfes 18 angezeigt. Der im vorderen Fahrzeugbereich sitzende Fahrzeuginsasse erkennt den aktiven Drehdruckknopf 210 durch die Beleuchtung des Indexzeigers 214. In diesem Fall kann die Temperatureinstellung (hier Skala 16 bis 32) nur über den vorderen Drehdruckknopf 210 vorgenommen werden.

Soll nun die Temperatur über den Fond-Fahrzeuginsassen eingestellt werden können, so drückt dieser seinen Drehdruckknopf 218, wodurch die Displayanzeige in seinem Drehdruckknopf erlischt und im Gegenzug der Indexzeiger 214' an seinem Drehdruckknopf erleuchtet wird. Der Fond-Fahrzeuginsasse kann die Temperatur nun manuell über seinen Drehdruckknopf 218 einstellen. Dem Fahrzeuginsassen im vorderen Fahrzeugbereich wird dieser Modus durch die Aktivierung des Schriftzugs "Fond aktiv" in Display 212 seines Drehdruckknopfes 210 angezeigt. Gleichzeitig wird die Beleuchtung seines Indexzeigers 214 ausgeschaltet. In diesem Modus besteht für den Fahrzeuginsassen im vorderen Fahrzeugbereich keine Möglichkeit der Temperatureinstellung.

Um wieder "Master" zu werden, muß der Fahrzeuginsasse im vorderen Bereich lediglich seinen Drehdruckknopf 210 wieder drücken. Dabei wurde die Einstellung vom Fondpassagier an diesem Drehdruckknopf 210 nicht verändert, was einen Vorteil gegenüber heutigen Displaylösungen darstellt. Alternativ kann auch lediglich durch die Drehbetätigung eines Drehknopfes eine Umschaltung erreicht werden.

Alternativ zu den dargestellten Ausführungsformen können ein Drehsteller und ein Schalter, welche in den vorliegenden Ausführungsformen zu einem Drehdruckknopf kombiniert sind, auch separat vorgesehen werden. Wesentlich ist lediglich, daß der Betriebsmodus des Drehstellers über das zusätzliche, ihm zugeordnete Leuchtmittel (z.B. beleuchtbares Display) angezeigt werden kann. Insofern ist die Erfindung daher nicht auf die vorliegenden Ausführungsformen beschränkt. Sie bietet eine einfache und kostengünstige sowie selbsterklärende Bedieneinheit und ermöglicht eine einfache Anzeige eines aktiven Modus.

## Patentansprüche

1. Einstelleinrichtung mit einem Drehsteller und einem Schalter, wobei dem Drehsteller eine beleuchtbare Indexanzeige zugeordnet ist, an der ein manuell am Drehsteller eingestellter Wert ablesbar ist, und wobei durch Betätigung des Schalters die manuelle Einstellung am Drehsteller überschreibbar ist,
**dadurch gekennzeichnet,**
**daß** zusätzlich zum Drehsteller (10, 110, 210, 218) eine Leuchteinrichtung (12, 112, 212, 212') vorgesehen ist, und daß der Schalter neben seiner eigentlichen Schaltfunktion zur Umschaltung zwischen der Beleuchtung der Indexanzeige (14, 114, 214, 214') und dem Betrieb der Leuchteinrichtung (12, 112, 212, 212') ausgebildet ist,
**daß** beim Drehsteller (10, 110, 210, 118) die Beleuchtung der Indexanzeige (14, 114, 214, 214') aktiviert ist, wenn er sich in seinem manuellen Modus befindet, und die Leuchteinrichtung (12, 112, 212, 212') aktiviert ist, wenn durch die Betätigung des Schalters ein anderer Modus eingestellt ist.
**daß** die Leuchteinrichtung (12, 112, 212, 212') ein Display umfaßt, welches von einem Leuchtmittel beleuchtbar ist, und
**daß** der Drehsteller (10, 110, 210, 218) derart ausgebildet ist, daß durch dessen Betätigung vom Betrieb der Leuchteinrichtung (12, 112, 212, 212') zur beleuchtbaren Indexanzeige (14, 114, 214, 214') umgeschaltet werden kann.

2. Einstelleinrichtung nach Anspruch 1,
**dadurch gekennzeichnet,**
**daß** der Drehsteller und der Schalter in Form eines Druckdrehknopfes (10, 110, 210, 218) kombiniert sind.

3. Einstelleinrichtung nach einem der Ansprüche 1 oder 2,
**dadurch gekennzeichnet,**
**daß** der Drehsteller (10, 110, 210, 218) das Bedienelement eines Potentiometers ist.

4. Einstelleinrichtung nach einem der Ansprüche 1 bis 3,
**dadurch gekennzeichnet,**
**daß** die Indexanzeige einen Zeiger (14, 114, 214, 214') umfaßt, der durch eine LED oder einen Lichtleiter beleuchtet oder gebildet wird.

5. Einstelleinrichtung nach einem der Ansprüche 1 bis 4,
**dadurch gekennzeichnet,**
**daß** die Indexanzeige eine Skala umfaßt, die beleuchtbar ist.

## Claims

1. An adjustment device comprising a turn-control element and a switch, an index display that may be illuminated and from which a value set manually on the turn-control element may be read being associated with the turn-control element, and wherein the manual setting on the turn-control element may be overridden by actuating the switch, **characterised in that**, in addition to the turn-control element (10, 110, 210, 218), a lighting device (12, 112, 212, 212') is provided, and **in that**, in addition to its actual switch function, the switch is configured for switching over between illumination of the index display (14, 114, 214, 214') and operation of the lighting device (12, 112, 212, 212'), **in that**, in the turn-control element (10, 110, 210, 118), the illumination of the index display (14, 114, 214, 214') is activated when said element is in its manual mode, and the lighting device (12, 112, 212, 212') is activated when a different mode is set by actuating the switch, **in that** the lighting device (12, 112, 212, 212') comprises a display element that may be illuminated by a lighting means, and **in that** the turn-control element (10, 110, 210, 218) is configured such that by actuating it, it is possible to switch over from operation of the lighting device (12, 112, 212, 212') to the index display (14, 114, 214, 214') that may be illuminated.

2. An adjustment device according to claim 1, **characterised in that** the turn-control element and the switch are combined in the form of a press-and-turn knob (10, 110, 210, 218).

3. An adjustment device according to either claim 1 or claim 2, **characterised in that** the turn-control element (10, 110, 210, 218) is the control element for a potentiometer.

4. An adjustment device according to any one of claims 1 to 3, **characterised in that** the index display comprises an indicator (14, 114, 214, 214') that is illuminated or formed by an LED or a light guide.

5. An adjustment device according to any one of claims 1 to 4, **characterised in that** the index display comprises a scale that may be illuminated.

## Revendications

1. Dispositif de réglage comprenant un actionneur rotatif et un commutateur, un index éclairable, sur lequel on peut lire la valeur réglée manuellement sur l'actionneur rotatif, étant associé à l'actionneur rota tif et le réglage manuel sur l'actionneur rotatif pouvant être modifié par l'actionnement du commutateur,
**caractérisé en ce qu'**
en plus de l'actionneur rotatif (10, 110, 210, 218), il est prévu un dispositif d'éclairage (12, 112, 212, 212'), et le commutateur outre sa fonction de commutation proprement dite est configuré pour basculer entre l'éclairage de l'index (14, 114, 214, 214') et le fonctionnement du dispositif d'éclairage (12, 112, 212, 212'),
sur l'actionneur rotatif (10, 110, 210, 218), l'éclairage de l'index (14, 114, 214, 214') est activé s'il se trouve en mode manuel et le dispositif d'éclairage (12, 112, 212, 212') est activé, si un autre mode a été fixé à l'aide du commutateur,
le dispositif d'éclairage (12, 112, 212, 212') comporte un cadran qui peut être éclairé par un moyen d'éclairage, et
l'actionneur rotatif (10, 110, 210, 218) est configuré de manière à ce que son actionnement permette de basculer entre le fonctionnement du dispositif d'éclairage (12, 112, 212, 212') et l'index éclairable lorsqu'on l'actionne.

2. Dispositif de réglage selon la revendication 1,
**caractérisé en ce que**
l'actionneur rotatif et le commutateur sont combinés en forme de bouton poussoir rotatif (10, 110, 210, 218).

3. Dispositif de réglage selon l'une quelconque des revendications 1,
**caractérisé en ce que**
l'actionneur rotatif (10, 110, 210, 218) est l'élément de commande d'un potentiomètre.

4. Dispositif de réglage selon l'une quelconque des revendications 1 ou 3,
**caractérisé en ce que**
l'index comporte une aiguille (14, 114, 214, 214') éclairée ou formée par une LED ou une fibre optique.

5. Dispositif de réglage selon l'une quelconque des revendications 1 à 4,
**caractérisé en ce que**
l'index comporte une échelle éclairable.
